# FASCICULE DE BREVET EUROPEEN

(11) **EP 0 682 854 B1**
(45) Date de publication et mention de la délivrance du brevet: **02.11.2000**
(21) Numéro de dépôt: 95440026.3
(22) Date de dépôt: 10.05.1995
(51) Int. Cl.: A01B 29/04, B60B 25/06

(54) **Rouleau de travail du sol à usage agricole et machine agricole utilisant un tel rouleau**
Landwirtschaftliche Bodenbearbeitungswalze und Landmaschine mit einer solchen Walze
An agricultural soil working roller and agricultural machine using such a roller

(30) Priorité: 17.05.1994 FR 9406156
(43) Date de publication de la demande: 22.11.1995
(73) Titulaire: KUHN S.A., 67700 Saverne (FR)
(72) Inventeur: Schott, Thierry, F-67350 La Walck (FR); Oberle, Edmond, F-67700 Haegen (FR); Phely, Olivier, F-77650 Chalmaison (FR)

(56) Documents cités:
- EP-A- 0 367 992
- EP-A- 0 380 020
- DE-U- 9 205 660
- FR-A- 999 684
- FR-A- 2 694 863
- GB-A- 236 610
- GB-A- 416 161
- US-A- 2 614 603
- PATENT ABSTRACTS OF JAPAN vol. 7 no. 257 (M-256) [1402] ,16 Novembre 1983 & JP-A-58 139801 (TOPY KOGYO KK) 19 Août 1983,

## Description

La présente invention se rapporte à un rouleau de travail du sol à usage agricole comprenant une poutre porteuse sur laquelle sont disposés des bandages creux en caoutchouc pouvant être fixés dans plusieurs positions longitudinales sur ladite poutre porteuse au moyen d'éléments de bridage.

Dans le document EP-A-0 380 020 est décrit un tel rouleau de travail du sol comportant une poutre porteuse de section carrée sur laquelle sont disposés des bandages creux en caoutchouc au moyen de jantes circulaires.

Chaque jante comporte un dispositif de bridage présentant extérieurement une surface cylindrique sur laquelle sont glissés le bandage creux correspondant, ainsi que des éléments d'appui s'étendant à l'intérieur dudit bandage creux. Ladite jante comporte par ailleurs deux flasques circulaires situés à l'extérieur, de part et d'autre dudit bandage creux et maintenant celui-ci sur ladite surface cylindrique à l'aide de quatre boulons, de sorte que chaque flanc dudit bandage creux soit coincé entre l'élément d'appui adjacent et le flasque circulaire correspondant. Cette jante et le bandage creux qu'elle supporte, sont fixés sur la poutre porteuse de section carrée au moyen des quatre brides dudit dispositif de bridage liées entre elles par huit boulons respectifs.

Grâce à cette construction, chaque bandage creux et sa jante correspondante peuvent, après desserrage des huit boulons, être translatés sur la poutre porteuse jusque dans la position désirée, puis fixés dans cette position en resserrant lesdits boulons. Il est ainsi possible d'adapter la configuration du rouleau à différentes conditions de travail. Il est en particulier possible d'adapter l'écartement des bandages creux aux écartements des rangs de semis au cas où le rouleau équipe une machine agricole de préparation de lits de semence.

Ce rouleau de travail du sol connu présente cependant un certain nombre d'inconvénients.

Un premier inconvénient résulte du montage des bandages creux sur la poutre porteuse. En effet, ceux-ci y sont montés chacun à l'aide d'une jante circulaire, laquelle est centrée sur la poutre porteuse, ce qui est particulièrement gênant puisqu'il est impossible de remplacer un bandage creux devenu défectueux sans démonter au préalable les jantes munies de leur bandage creux avoisinantes (sauf pour le remplacement des bandages creux situés aux extrémités). Une telle opération demande un temps de réparation conséquent non acceptable.

Un deuxième inconvénient résulte de la fixation de la jante sur la poutre porteuse. En effet, cette jante est fixée sur la poutre porteuse au moyen de quatre brides maintenues entre elles par huit boulons. Le démontage des jantes munies de leur bandage creux respectif ou tout simplement le réglage de l'écartement entre bandages creux nécessite ainsi le desserrage, puis le resserrage d'un grand nombre de boulons. Il en découle là également un temps d'intervention relativement long et non acceptable.

Un troisième inconvénient résulte de la taille de la poutre porteuse. En effet, du fait de l'implantation d'une jante entre chaque bandage creux et la poutre porteuse, la section de cette dernière est relativement petite, ce qui rend ladite poutre porteuse relativement fragile.

Un quatrième inconvénient enfin résulte de la conception même dudit rouleau de travail du sol connu. En effet, chaque ensemble bandage creux-jante est composé d'une multitude d'éléments, ce qui se traduit par un poids relativement important du rouleau et un prix de revient probablement particulièrement élevé.

Un autre rouleau de travail du sol ayant les caractéristiques telles que décrites dans le préambule des revendications 1 et 9 est connu par exemple dans le document EP-A- 0367992.

Le but de la présente invention est de remédier aux inconvénients du rouleau de travail du sol de l'art antérieur.

A cet effet, un premier rouleau de travail du sol à usage agricole selon la présente idée inventive, qui comporte une poutre porteuse sur laquelle sont disposés des bandages creux en caoutchouc peuvent être fixés dans plusieurs positions longitudinales sur ladite poutre porteuse au moyen d'éléments de bridage, est caractérisé en ce que chaque bandage creux s'appuie directement sur la poutre porteuse et y est maintenu par au moins un élément de bridage composé d'au moins deux parties de bridage dissociables fixées entre elles par des organes d'assemblage.

Un deuxième rouleau de travail du sol à usage agricole selon la présente idée inventive qui comporte une poutre porteuse sur laquelle sont disposés des bandages creux en caoutchouc pouvant être fixés dans plusieurs positions longitudinales sur ladite poutre porteuse au moyen d'éléments de bridage, est caractérisé en ce que chaque bandage creux comporte une première partie en regard de la poutre porteuse et, de part et d'autre de celle-ci, une deuxième partie laquelle prend son origine sur ladite première partie et se développe de sorte à former une cavité après montage sur la poutre porteuse, ledit bandage creux étant fixé sur cette dernière par deux éléments de bridage pénétrant chacun dans une respective desdites cavités, chaque élément de bridage étant composé d'au moins deux parties de bridage dissociables fixées entre elles par des organes d'assemblage.

Dans les rouleaux selon l'invention, le montage des bandages creux sur la poutre porteuse ne fait pas appel à des jantes entourant complètement ladite poutre porteuse et s'étendant entre le bandage creux et cette dernière.

Ainsi, au cas où un bandage creux devenait défectueux, il suffit simplement :
- d'éloigner les organes d'assemblage fixant entre elles les parties de bridage maintenant le bandage creux défectueux sur la poutre porteuse ;
- d'enlever lesdites parties de bridage et le bandage creux défectueux, ce qui est parfaitement possible puisque les parties de bridage sont dissociables et que le bandage creux qui est en caoutchouc, peut être coupé en cas de besoin ;
- de glisser successivement les différents bandages creux se trouvant entre l'endroit libéré et une extrémité du rouleau ;
- de monter un nouveau bandage creux à ladite extrémité du rouleau.

Le remplacement d'un bandage creux défectueux est ainsi relativement rapide. A diamètre extérieur des bandages creux égal, la poutre porteuse des rouleaux selon l'invention peut également avoir une dimension plus importante étant donné qu'il n'existe pas de jantes entre lesdits bandages creux et ladite poutre porteuse.

Il convient enfin de noter que le montage d'un bandage creux sur la poutre porteuse ne nécessite qu'un nombre minimal de pièces.

Selon une autre caractéristique de l'invention, il pourra être prévu que chaque bandage creux du premier rouleau selon la présente idée inventive soit maintenu par deux éléments de bridage situés de part et d'autre dudit bandage creux. Le bandage creux sera ainsi fermement maintenu de chaque côté.

Selon une autre caractéristique de l'invention, il pourra également être prévu que chaque bandage creux du premier rouleau selon la présente idée inventive comporte une première partie s'appuyant sur la poutre porteuse et dont l'extrémité longitudinale en regard d'un élément de bridage soit pincée entre la surface extérieure de ladite poutre porteuse et ledit élément de bridage.

Dans ce cas, il pourra être avantageusement prévu que la surface extérieure de la poutre porteuse soit au moins sensiblement cylindrique et, qu'avant montage, la première partie du bandage creux comporte, dans la zone destinée à collaborer avec un élément de bridage, une surface tronconique convergeant vers le plan radial médian dudit bandage creux, le diamètre du plus petit cercle de ladite surface tronconique étant au moins sensiblement égal au diamètre de la surface extérieure de ladite poutre porteuse.

Lors du montage des bandages creux sur la poutre porteuse ou lors du réglage de l'écartement entre bandages creux, lesdits bandages creux pourront ainsi être facilement glissés le long de la poutre porteuse. En pinçant ensuite l'extrémité longitudinale adéquate de la première partie à l'aide de l'élément de bridage, on déformera ladite surface tronconique pour bien appliquer la première partie du bandage creux sur la surface extérieure de la poutre porteuse. On comprendra aussi que ladite surface tronconique facilite la réalisation du bandage creux.

Il pourra d'ailleurs être prévu que ledit cercle soit au moins sensiblement situé dans le plan radial médian dudit bandage creux.

Il pourra du reste être avantageusement prévu que l'élément de bridage vienne en appui sur la face supérieure de la première partie du bandage creux de manière localisée par l'intermédiaire de renflements.

Il pourra également être avantageusement prévu que la longueur de la première partie soit sensiblement égale aux deux tiers de la largeur extérieure totale du bandage creux.

Il pourra aussi être prévu que chaque bandage creux comporte, du côté d'un élément de bridage, une deuxième partie laquelle prend son origine sur la première partie entre l'extrémité longitudinale correspondante de cette dernière et le plan radial médian et se développe de sorte à former une cavité avec la première partie, dans laquelle pénètre ledit élément de bridage.

Grâce à cette cavité qui existe d'ailleurs également dans le deuxième rouleau selon la présente idée inventive, l'élément de bridage pourra avoir une largeur suffisante pour bien maintenir le bandage creux sans toutefois dépasser de manière importante le bord correspondant de celui-ci. Ceci permet notamment, si souhaité, d'approcher les divers bandages creux le plus près possible l'un de l'autre. Mais ceci permet également de réduire la hauteur du flanc correspondant du bandage creux, de sorte que celui-ci présente une bonne stabilité latérale.

Il pourra en sus être avantageusement prévu que la surface intérieure de la cavité formée par la deuxième partie soit en contact avec la surface extérieure de l'élément de bridage correspondant. Le bandage creux présente ainsi une rigidité plus importante au droit de l'élément de bridage, qui lui permet de créer un rappuyage plus énergique en cet endroit.

Dans ce cas, il sera de préférence prévu que ledit contact entre la surface intérieure de la cavité formée par la deuxième partie et la surface extérieure de l'élément de bridage s'opère sur au moins sensiblement tout le pourtour de la surface extérieure dudit élément de bridage.

Il pourra également être avantageusement prévu que la surface intérieure de la cavité formée par la deuxième partie épouse au moins sensiblement la surface extérieure dudit élément de bridage.

Il pourra du reste être prévu :
- que la surface intérieure de la cavité formée par la deuxième partie soit courbe et concave, et/ou
- que l'extrémité extérieure de la deuxième partie s'étende latéralement au-delà de l'extrémité correspondante de la première partie.

Il pourra par ailleurs être prévu que l'extrémité extérieure de la deuxième partie comporte un bourrelet d'étanchéité s'appuyant sur tout le pourtour dudit élément de bridage correspondant. Ce bourrelet d'étanchéité est notamment destiné à empêcher l'introduction de terre et/ou de petites pierres dans la cavité et plus particulièrement entre la surface extérieure de l'élément de bridage et la surface intérieure de la cavité formée par la deuxième partie.

Selon une autre caractéristique de l'invention, il pourra être prévu que chaque bandage creux comporte une troisième partie comportant d'une part deux flancs dirigés essentiellement radialement et d'autre part une surface de roulement essentiellement cylindrique raccordant les deux flancs entre eux et centrée au moins sensiblement sur l'axe de rotation dudit bandage creux, le flanc situé en regard d'un élément de bridage prenant son origine à l'extrémité extérieure de la deuxième partie correspondante.

Avantageusement, cette surface de roulement pourra comporter des crampons.

Il pourra du reste être avantageusement prévu que le flanc situé en regard d'un élément de bridage soit de forme arrondie, la convexité étant dirigée vers l'extérieur.

S'il est prévu que le flanc situé en regard d'un élément de bridage s'étende directement au-dessus dudit élément de bridage, la capacité à procurer un rappuyage plus énergique sera encore accrue.

Selon une autre caractéristique de l'invention, il pourra être prévu que ledit élément de bridage vienne en appui sur la poutre porteuse.

Cet appui dudit élément de bridage sur la poutre porteuse pourra être soit un appui au moins sensiblement linéaire, soit un appui surfacique.

Selon une autre caractéristique de l'invention, il pourra être prévu qu'après montage les extrémités adjacentes des parties de bridage d'un élément de bridage ne soient pas en contact l'une sur l'autre.

Selon une autre caractéristique de l'invention, il pourra aussi être prévu que les organes d'assemblage comportent des vis.

Dans ce cas, il sera avantageux de prévoir que l'axe de ladite vis forme un angle avec le plan radial médian du bandage creux, de telle sorte que la tête de la vis soit plus éloignée dudit plan radial médian que l'extrémité de sa tige. L'accès à la tête de la vis sera ainsi relativement aisé, en particulier s'il est prévu que l'élément de bridage pénètre dans une cavité du bandage creux.

Il pourra du reste être prévu que l'une des extrémités de chaque partie de bridage soit pourvue d'un trou lisse et que l'autre extrémité de ladite partie de bridage soit pourvue d'un trou taraudé, une vis étant destinée à traverser le trou lisse de l'une des parties de bridage et à être vissée dans le trou taraudé de la partie de bridage adjacente.

Il pourra, dans ce cas, être avantageusement prévu que l'extrémité de chaque partie de bridage qui est pourvue d'un trou lisse comporte un évidement pour le logement de la tête de la vis correspondante. La tête de la vis sera ainsi bien protégée et en tous cas largement à l'abri de la terre et/ou des pierres pouvant se trouver dans le champ à travailler. Du reste, la tête de la vis ne pourra pas donner lieu à des accrochages de débris végétaux ou autres.

Selon une autre caractéristique de l'invention, il pourra être prévu que les organes d'assemblage comportent au moins un élément de fixation rapide.

Dans ce cas, il sera avantageux de prévoir que l'une des extrémités de chaque partie de bridage soit pourvue d'un axe d'accrochage et que l'autre extrémité de ladite partie de bridage soit pourvue de l'élément de fixation rapide, ledit élément de fixation rapide de l'une des parties de bridage étant destiné à s'accrocher à l'axe d'accrochage de la partie de bridage adjacente.

Il sera, là également, avantageux de prévoir que chaque partie de bridage comporte, à l'une de ses extrémités,un évidement pour le logement de l'axe d'accrochage et, à l'autre extrémité, un évidement pour le logement de l'élément de fixation rapide. Ainsi, ces organes de fixation rapide seront également à l'abri de la terre et des pierres et ne pourront pas non plus donner lieu à des accrochages de débris végétaux.

Dans tous les cas, il sera préférable que les organes d'assemblage ne s'étendent pas au-delà de la périphérie des éléments de bridage.

Selon une autre caractéristique de l'invention, il pourra être prévu que chaque partie de bridage soit formée par une seule pièce présentant une certaine élasticité.

Selon une autre caractéristique de l'invention, il pourra aussi être prévu que toutes les parties de bridage d'un élément de bridage soient identiques. Ceci réduit bien entendu le prix de revient du rouleau.

Il pourra d'ailleurs être avantageusement prévu que chaque partie de bridage soit obtenue par moulage.

La forme de chaque partie de bridage pourra être optimisée de telle sorte que le bord de chaque partie de bridage ne s'étende latéralement que légèrement au-delà du bandage creux.

Préférentiellement, il sera d'ailleurs prévu que ledit bord présente un arrondi d'un rayon relativement grand.

Si souhaité, les bandages creux pourront être réglés de sorte à être pratiquement jointifs. En tous cas, les éléments de bridage ne pourront pas constituer d'obstacles capables de générer des accrochages.

Dans une réalisation particulièrement avantageuse, il pourra être prévu que chaque bandage creux soit au moins sensiblement symétrique par rapport à son plan radial médian.

L'invention concerne par ailleurs une machine agricole combinée de travail du sol comportant une machine agricole de travail du sol et/ou un semoir et un rouleau dans laquelle le rouleau présente une ou plusieurs des caractéristiques ci-dessus.

D'autres objets et caractéristiques de l'invention ressortiront de la description ci-après, avec référence aux dessins annexés qui représentent, à titre d'exemples non limitatifs, une forme de réalisation de chacun des deux rouleaux de travail du sol à usage agricole selon l'invention.

Sur ces dessins :
- la figure 1 est une vue de côté d'une machine agricole combinée de travail du sol attelée à un véhicule moteur et comportant un rouleau de travail du sol à usage agricole selon l'invention ;
- la figure 2 est une vue de face, à une autre échelle, du rouleau représenté sur la figure 1 dans une configuration dans laquelle les bandages creux sont pratiquement jointifs ;
- la figure 3 est une vue de face, à une autre échelle, du rouleau représenté sur la figure 1 dans une autre configuration dans laquelle les bandages creux sont plus espacés ;
- la figure 4 est une vue de face, à une autre échelle, d'un premier rouleau de travail du sol à usage agricole selon la présente idée inventive, vue sur laquelle ont été effectuées différentes coupes partielles ;
- la figure 5 montre une section radiale du bandage creux seul (avant montage) du rouleau représenté sur la figure 4 ;
- la figure 6 est une vue en perspective représentant une partie de bridage seule du rouleau représenté sur la figure 4 ;
- la figure 7 est une vue de face, à une autre échelle et en coupe, d'un deuxième rouleau de travail du sol à usage agricole selon la présente idée inventive ;
- la figure 8 est une vue de côté, à une autre échelle et en coupe partielle suivant la flèche VIII définie sur la figure 7 du rouleau représenté sur la figure 7.

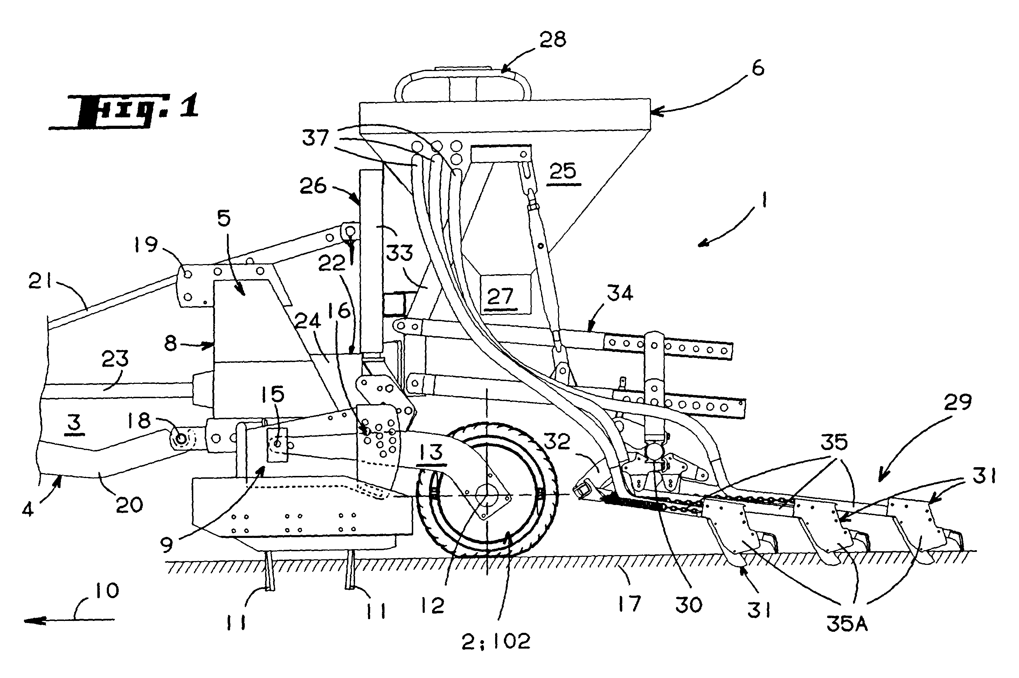

Sur la figure 1, on voit une machine agricole combinée de travail du sol et de semis (1) équipée d'un rouleau de travail du sol (2 ; 102) selon l'invention. Cette machine agricole combinée de travail du sol et de semis (1) est liée à l'attelage (3) d'un véhicule moteur (4) et comprend en sus une machine de préparation du lit de semence (5) et un semoir (6).

La machine de préparation du lit de semence (5) comporte un châssis (8) supportant une poutre support (9) qui s'étend transversalement à la direction de travail (10). Sous la poutre support (9) s'étendent des outils de travail du sol (11) liés à des rotors (non représentés). Ces derniers sont guidés en rotation dans la poutre support (9), de sorte à pouvoir tourner autour d'axes respectifs dirigés vers le haut.

Le rouleau de travail du sol (2 ; 102) est implanté derrière lesdits rotors (non représentés) de manière que son axe de rotation (12) s'étende au moins sensiblement orthogonalement à la direction de travail (10). Le rouleau (2 ; 102) selon l'invention est guidé en rotation entre les extrémités arrière de deux bras (13) liés chacun à son extrémité avant à la poutre support (9) au moyen d'une articulation (15) d'axe longitudinal s'étendant au moins sensiblement parallèlement à l'axe de rotation (12) du rouleau (2 ; 102). Entre chacun de ces bras (13) et la poutre support (9) est prévu un dispositif de réglage (16) de la profondeur de travail des outils de travail du sol (11). Grâce à ces deux dispositifs de réglage (16) de la profondeur de travail, il est possible de régler la position en hauteur du rouleau (2 ; 102) par rapport à la poutre support (9). Au travail, le rouleau (2 ; 102) roule en s'appuyant sur le sol (17) et détermine ainsi la profondeur de travail des outils de travail du sol (11).

Au travail, les dispositifs de réglage (16) de la profondeur de travail limitent uniquement le déplacement de ladite poutre support (9) vers le bas par rapport au rouleau (2 ; 102). Grâce à cette caractéristique, la poutre support (9) de la machine de préparation du lit de semence (5) peut se déplacer provisoirement vers le haut lorsque les outils de travail du sol (11) rencontrent un obstacle enfoui dans le sol.

Dans ce cas, le rouleau (2 ; 102) reste en contact avec le sol (17). Le rouleau de travail du sol (2 ; 102) selon l'invention sera décrit plus en détail ci-après.

Le châssis (8) comporte par ailleurs deux points d'attelage inférieurs (18) et un point d'attelage supérieur (19) prévus pour l'accouplement de la machine agricole combinée de travail du sol et de semis (1) à l'attelage trois points arrière (3) du véhicule moteur (4) (sur la figure 1, on n'a représenté que les barres (20, 21) dudit attelage (3)).

L'entraînement en rotation des outils de travail du sol (11) est réalisé par des moyens d'entraînement (22) recevant eux-mêmes le mouvement de l'arbre de prise de force (non représenté) du véhicule moteur (4) au moyen d'un arbre de transmission à joints universels (23). Ces moyens d'entraînement (22) sont connus de l'homme de l'art et comportent notamment un carter central de renvoi (24) qui pourra avantageusement être constitué sous forme de boîte de vitesses. Il comporte d'une part un arbre de sortie pénétrant dans la poutre support (9) pour entraîner de manière connue les rotors (non représentés) et les outils de travail du sol (11) équipant ces derniers, et d'autre part un arbre de sortie arrière (non représenté) servant à entraîner le semoir (6) via des moyens d'entraînement non représentés mais également connus par l'homme de l'art.

Le semoir (6), quant à lui, comporte une trémie (25) dans laquelle se trouvent les graines à implanter dans le lit de semence préparé par la machine de préparation du lit de semence (5). Ledit semoir (6) est, dans l'exemple représenté, porté par la machine de préparation du lit de semence (5) et est, à cet effet, doté d'une structure d'attelage (26) permettant de fixer ledit semoir (6) au châssis (8) de la machine de préparation du lit de semence (5).

A la base de la trémie (25) est agencé un dispositif de dosage (27) de la semence connu de l'homme de l'art. A la sortie de ce dispositif de dosage (27), la semence est transportée par un dispositif de distribution et d'acheminement (28) jusqu'à un dispositif d'implantation (29) des graines dans le sol (17).

Ce dispositif d'implantation (29) comporte une structure porteuse (30), une triple rangée de conduites (31) de guidage et d'implantation des graines dans le sol (17) et un dispositif de terrage (32) agencés de manière connue de l'homme de l'art. Ledit dispositif d'implantation (29) est lié au châssis (33) du semoir (6) au moyen d'une structure de liaison (34) comportant deux parallélogrammes déformables dans un plan au moins sensiblement vertical et supportant, à leur extrémité arrière, la structure porteuse (30) dudit dispositif d'implantation (29).

Chaque conduite (31) de guidage et d'implantation des graines dans le sol (17) comporte une conduite d'alimentation (35) et un soc de semis (35A) fixé dans le prolongement de cette dernière.

Le dispositif de distribution et d'acheminement (28), quant à lui, comporte des tuyaux (37) destinés à véhiculer la semence jusqu'aux conduites (31) de guidage et d'implantation.

Afin d'obtenir un semis homogène et uniforme, les socs de semis (35A) sont espacés au moins sensiblement régulièrement sur toute la largeur de travail de la machine agricole combinée (1) formant ainsi des rangs de semis au moins sensiblement régulièrement espacés.

Le rouleau de travail du sol (2 ; 102) est implanté sur la machine de préparation dudit lit de semence (5) de manière à travailler le sol en fonction de la disposition souhaitée desdits rangs de semis.

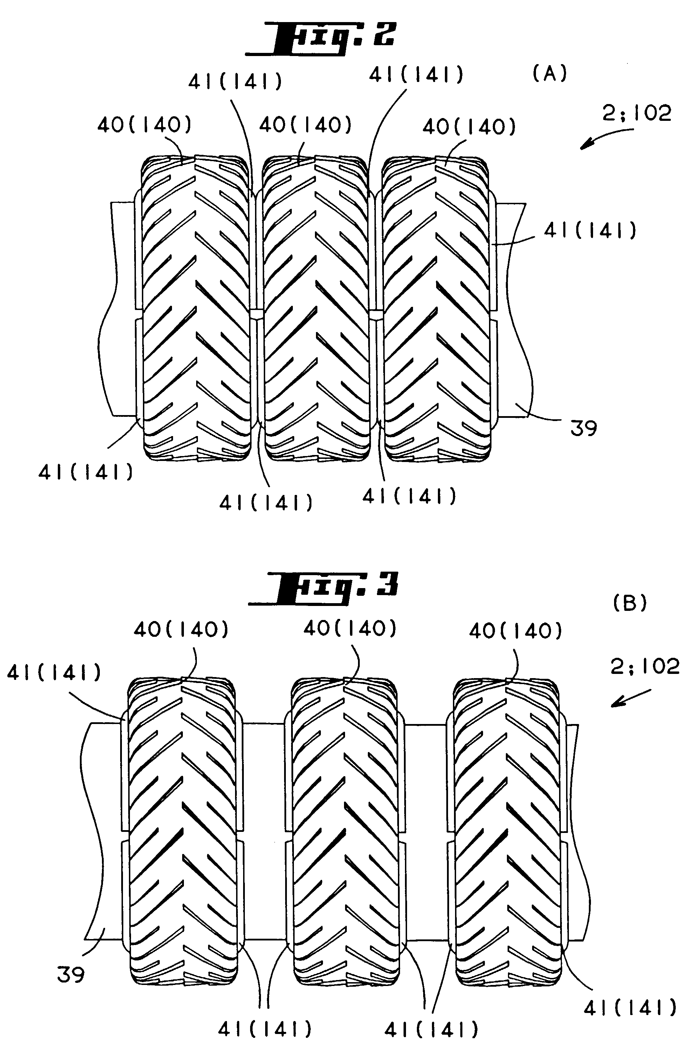

La figure 2 montre le rouleau de travail du sol (2 ; 102) dans une première configuration (A). Celui-ci comporte, dans les grandes lignes, une poutre porteuse (39) sur laquelle sont disposés des bandages creux (40 ; 140) en caoutchouc fixés de manière pratiquement jointive sur ladite poutre porteuse (39) au moyen d'éléments de bridage (41 ; 141). Dans cette configuration (A), le rouleau de travail du sol (2 ; 102) est particulièrement bien adapté au semis de céréales qui sont généralement implantées en rangs relativement serrés.

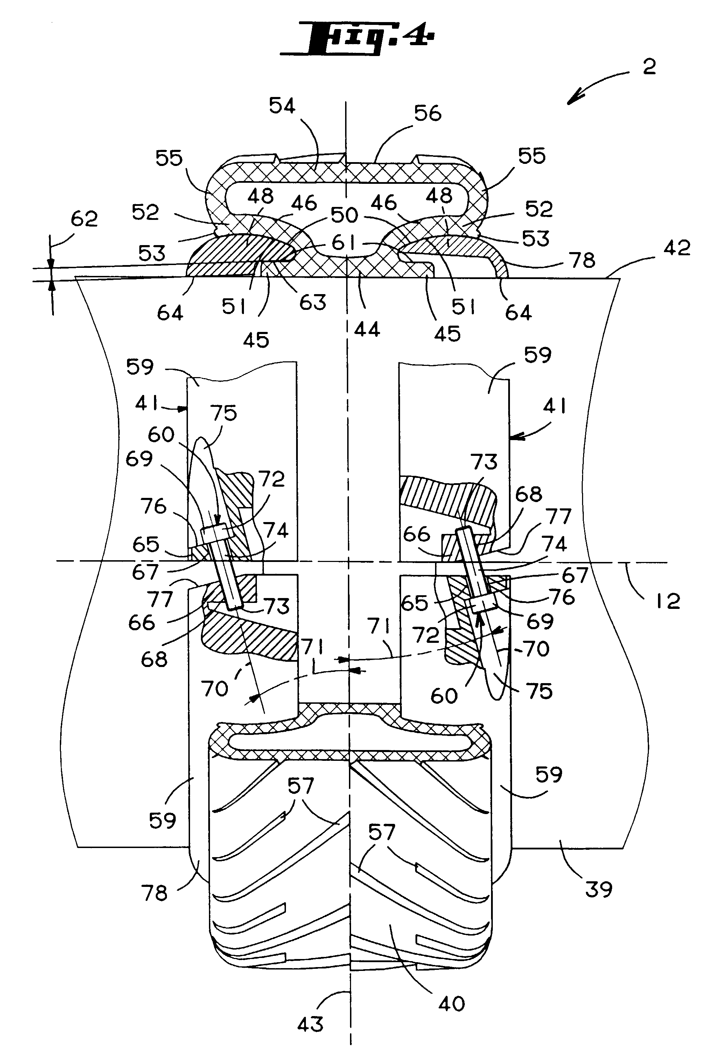

La figure 3, quant à elle, montre le rouleau de travail du sol (2 ; 102) dans une deuxième configuration (B) qui résulte en fait de la configuration (A) dans laquelle quelques bandages creux (40 ; 140) ont été démontés et les bandages creux (40 ; 140) restants ont tout simplement été quelque peu écartés les uns des autres. Dans cette deuxième configuration (B), le rouleau de travail du sol (2 ; 102) est plus particulièrement adapté au semis en rangs plus écartés (colza, maïs, betteraves,...).

La configuration du rouleau de travail du sol (2 ; 102) selon l'invention peut par conséquent être adaptée aux différents types de travaux à effectuer.

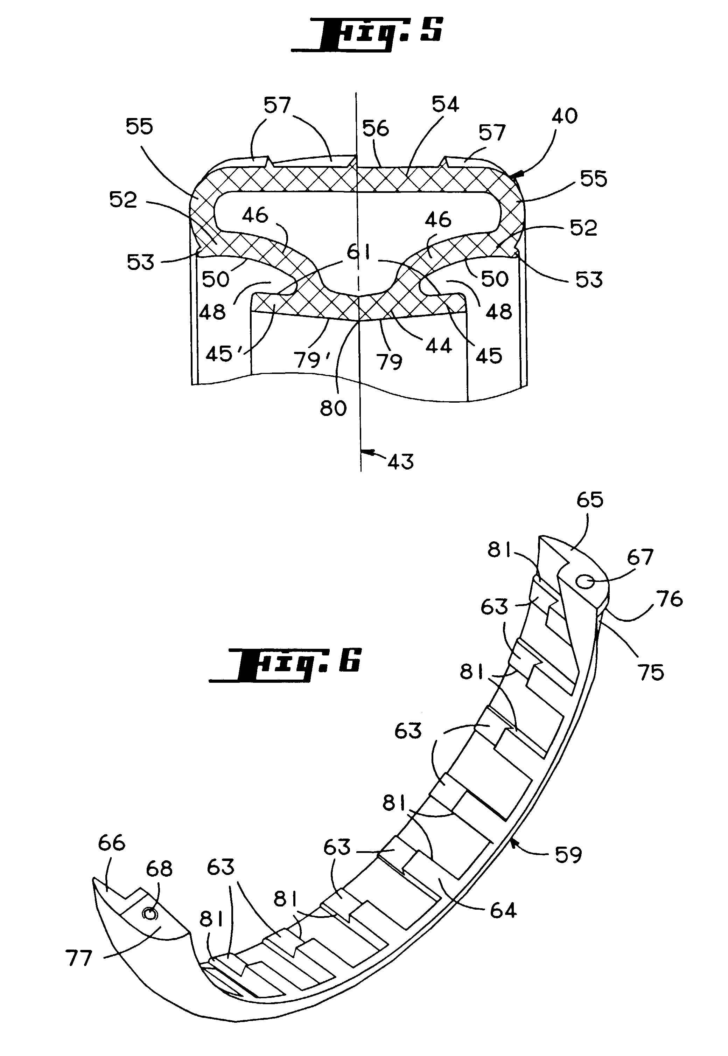

La figure 4 montre un exemple de réalisation d'un premier rouleau de travail du sol (2) selon la présente idée inventive. Celui-ci comprend une poutre porteuse (39) de surface extérieure (42) au moins sensiblement cylindrique sur laquelle sont fixés des bandages creux (40) en caoutchouc, respectivement au moyen de deux éléments de bridage (41) situés de part et d'autre du bandage creux (40) correspondant qui est au moins sensiblement symétrique par rapport à son plan radial médian (43).

Chaque bandage creux (40) comporte une première partie (44) s'appuyant directement sur la surface extérieure (42) de la poutre porteuse (39) et dont les extrémités longitudinales (45) en regard desdits éléments de bridage (41) sont pincées entre ladite surface extérieure (42) et lesdits éléments de bridage (41).

Il apparaît également que la première partie (44) est en contact sur toute sa largeur avec la surface extérieure (42) de la poutre porteuse (39) lorsque le bandage creux (40) est monté sur cette dernière. De surcroît, la longueur de la première partie (44) est sensiblement égale aux deux tiers de la largeur extérieure du bandage creux (40).

Ledit bandage creux (40) comporte également une deuxième partie (46) au niveau de chaque élément de bridage (41), laquelle prend son origine sur la première partie (44) entre l'extrémité (45) correspondante de cette dernière et le plan radial médian (43) et se développe de sorte à former notamment avec ladite extrémité (45) correspondante de la première partie (44) une cavité (48) dans laquelle pénètre ledit élément de bridage (41).

On notera de surcroît que la surface intérieure (50) de chaque cavité (48) formée par la deuxième partie (46) est en contact avec la surface extérieure (51) de l'élément de bridage (41) correspondant sur au moins sensiblement tout le pourtour de celle-ci et épouse ainsi au moins sensiblement cette surface extérieure (51).

Il convient encore de noter que la surface intérieure (50) de chaque cavité (48) est courbe et concave et que l'extrémité extérieure (52) de la deuxième partie (46) correspondante s'étend latéralement au-delà de l'extrémité (45) correspondante de ladite première partie (44). Il est par ailleurs prévu que l'extrémité extérieure (52) de chaque deuxième partie (46) comporte un bourrelet d'étanchéité (53) s'appuyant sur tout le pourtour de l'élément de bridage (41) correspondant afin d'assurer une bonne étanchéité entre ledit bandage creux (40) et ses éléments de bridage (41).

Enfin, le bandage creux (40) comporte encore une troisième partie (54) comportant elle-même deux flancs (55) et une surface de roulement (56) raccordant les deux flancs (55) entre eux. Chaque flanc (55) est dirigé essentiellement radialement et est de forme arrondie d'un rayon relativement grand, la convexité étant dirigée vers l'extérieur. Chaque flanc (55) prend son origine à l'extrémité extérieure (52) de la deuxième partie (46) correspondante et s'étend directement au-dessus de l'élément de bridage (41) correspondant.

Ladite troisième partie (54) du bandage creux (40) comporte, comme dit, une surface de roulement (56) de forme essentiellement cylindrique qui est, de surcroît, centrée au moins sensiblement sur l'axe de rotation (12) dudit bandage creux (40). Il est par ailleurs prévu que la surface de roulement (56) comporte des crampons (57) répartis sensiblement uniformément sur toute la circonférence de ladite surface de roulement (56), de sorte à favoriser l'adhérence au sol du bandage creux (40) et permettre ainsi un bon entraînement en rotation du rouleau de travail du sol (2). A cet effet, les crampons (57) sont avantageusement inclinés par rapport au plan radial médian (43). On voit encore sur la figure 4 que chaque élément de bridage (41) est composé de deux parties de bridage (59) identiques, en forme de demi-lune, fixées entre elles au moyen d'organes d'assemblage (60). Chaque partie de bridage (59) est formée d'une seule pièce venant d'une part en appui sur la face supérieure (61) de la première partie (44) du bandage creux (40) et d'autre part sur la poutre porteuse (39) au moins sensiblement circulairement. A cet effet, chaque extrémité longitudinale (45) de la première partie (44) du bandage creux (40) a une épaisseur quelque peu supérieure à la distance radiale (62) séparant les faces d'appui (63 et 64) des parties de bridage (59) correspondantes.

Il est prévu que chaque partie de bridage (59) soit pourvue à l'une (65) de ses extrémités (65, 66) d'un trou lisse (67) et à l'autre extrémité (66) d'un trou taraudé (68) de préférence débouchant. Chaque organe d'assemblage (60) est composé d'une vis (69) traversant le trou lisse (67) de l'une des parties de bridage (59) et vissée dans le trou taraudé (68) de la partie de bridage (59) adjacente.

On remarquera que lorsque les deux parties de bridage (59) sont montées et liées l'une à l'autre par les vis (69), les extrémités (65, 66) desdites parties de bridage (59) ne sont pas en contact l'une sur l'autre, ce qui permet avantageusement le serrage du bandage creux (40) sur la poutre porteuse (39).

Par ailleurs, l'axe (70) de chaque vis (69) forme un angle (71) avec le plan radial médian (43) du bandage creux (40), de telle sorte que la tête de vis (72) soit plus éloignée dudit plan radial médian (43) que l'extrémité (73) de sa tige (74). Un évidement (75) prévu à chaque extrémité (65) des parties de bridage (59) permet le logement de la tête de vis (72) correspondante de manière à ce qu'elle ne s'étende pas au-delà de la périphérie de l'élément de bridage (41).

Cet évidement (75) comporte une surface d'appui (76) de la tête de vis (72) sensiblement plane et orthogonale à l'axe (70). L'extrémité (66) de chaque partie de bridage (59) comporte également une surface (77) sensiblement plane et orthogonale à l'axe (70), ce qui permet une réalisation aisée du trou taraudé (68).

Il est bien entendu parfaitement possible d'implanter la vis (69) au moins sensiblement parallèlement au plan radial médian (43) du bandage creux (40). Le montage et le démontage de la vis (69) se feraient alors en déformant légèrement les flancs (55) du bandage creux (40) de manière à pouvoir accéder à la tête de vis (72).

On peut encore voir sur cette figure 4 que le bord (78) de chaque partie de bridage (59) présente un arrondi d'un rayon relativement grand. On voit par ailleurs que le bord (78) ne s'étend latéralement que légèrement au-delà du bandage creux (40), ce qui permet avantageusement, le cas échéant, d'approcher les bandages creux (40) très près l'un de l'autre.

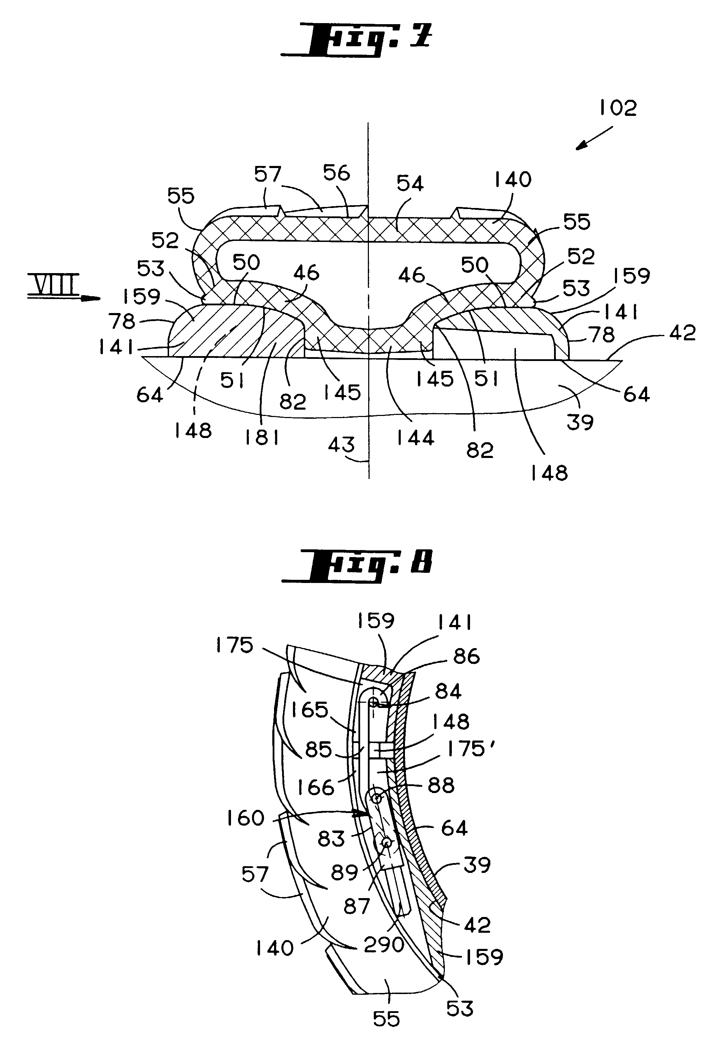

Sur la figure 5, on voit un bandage creux (40) avant montage sur la poutre porteuse (39). On remarque que la première partie (44) du bandage creux (40) comporte deux surfaces tronconiques (79, 79') destinées à venir en contact avec la surface extérieure (42) de la poutre porteuse (39) et convergeant vers le plan radial médian (43) dudit bandage creux (40). L'intersection desdites surfaces tronconiques (79, 79') (cercle (80)) se fait au moins sensiblement dans ledit plan radial médian (43). Ce cercle (80) d'intersection a un diamètre très légèrement supérieur au diamètre de la surface extérieure (42) de la poutre porteuse (39).

On notera par ailleurs que les faces supérieures (61) de la première partie (44) sont, dans cet exemple, au moins sensiblement parallèles aux surfaces tronconiques (79, 79') correspondantes.

Une telle conception du bandage creux (40) permet, outre la facilité de montage du bandage creux (40) sur la poutre porteuse (39), d'assurer en position montée, un bon contact de la surface intérieure (50) et des bourrelets d'étanchéité (53) de chaque deuxième partie (46) sur la surface extérieure (51) des parties de bridage (59) correspondantes. En effet, lors du montage et du serrage des vis (69), les parties de bridage (59) plaquent l'extrémité (45) correspondante de la première partie (44) sur la poutre porteuse (39), ce qui a pour effet de déformer la deuxième partie (46) correspondante du bandage creux (40) et de plaquer celle-ci avec son bourrelet d'étanchéité (53) sur la surface extérieure (51) des parties de bridage (59) correspondantes.

La figure 6 montre plus précisément une partie de bridage (59). A la lumière de cette figure, on voit que la face d'appui (63) de la partie de bridage (59) est formée sur des renflements (81) et est donc destinée à venir en appui sur la face supérieure (61) de la première partie (44) du bandage creux (40) de manière localisée. Par ailleurs, on voit que la face d'appui (64) de ladite partie de bridage (59) destinée à venir en appui sur la surface extérieure (42) de la poutre porteuse (39) est également formée partiellement sur les renflements (81). Lesdits renflements (81) sont espacés à intervalles réguliers sur toute la longueur de la partie de bridage (59). Cependant, il est parfaitement imaginable que ces renflements (81) aient une forme différente de celle représentée ou que la partie de bridage (59) soit dépourvue de renflements (81) de sorte que les faces d'appui (63, 64) soient tout simplement continues.

Ladite partie de bridage (59) est avantageusement réalisée par un procédé de moulage et il est parfaitement possible d'utiliser des matières telles que fonte, matières plastiques, etc. En vue d'un montage optimal, il est également avantageux de prévoir que la partie de bridage (59) présente une certaine élasticité.

Le montage d'un bandage creux (40) sur la poutre porteuse (39) s'opère comme suit :

On prémonte au préalable deux éléments de bridage (41) en liant quatre parties de bridage (59) deux à deux au moyen des vis (69). On introduit ensuite ces éléments de bridage (41) dans les cavités (48) du bandage creux (40). On notera qu'à ce stade, les vis (69) ne sont pas encore entièrement serrées. On glisse alors cet ensemble prémonté sur la poutre porteuse (39) jusqu'à l'endroit souhaité, puis on serre les vis (69) de sorte que les éléments de bridage (41) prennent appui sur la poutre porteuse (39) par leurs faces d'appui (64) et pincent les extrémités (45) correspondantes de la première partie (44) du bandage creux (40) fixant ainsi ledit bandage creux (40) sur la poutre porteuse (39).

Les figures 7 et 8 montrent un exemple de réalisation d'un deuxième rouleau agricole de travail du sol (102) selon la présente idée inventive. Ce rouleau de travail du sol (102) comporte un certain nombre d'éléments qui ont été décrits précédemment. Ces éléments garderont par conséquent le même numéro de répère et ne seront pas redécrits. Il comporte également un certain nombre d'éléments qui sont comparables à des éléments du rouleau de travail du sol (2). Ces éléments seront affectés du même numéro de repère que ces éléments comparables du rouleau (2) augmenté de cent. Ils ne seront décrits que si cela s'avère nécessaire.

Chaque bandage creux (140) du rouleau (102) est au moins sensiblement symétrique par rapport à son plan radial médian (43) et est fixé sur la poutre porteuse (39) au moyen de deux éléments de bridage (141) situés de part et d'autre dudit bandage creux (140). Il comporte une première partie (144) sensiblement cylindrique d'un diamètre intérieur quelque peu supérieur au diamètre de la surface extérieure (42) de la poutre porteuse (39) et au moins sensiblement coaxiale avec ladite poutre porteuse (39). De part et d'autre de cette première partie (144), le bandage creux (140) comporte une deuxième partie (46) laquelle prend son origine à l'extrémité (145) correspondante de la première partie (144) et se développe de sorte à former une cavité (148) après montage sur la poutre porteuse (39), dans laquelle pénètre l'élément de bridage (141) correspondant. La cavité (148) est dimensionnée de telle manière que là aussi la surface intérieure (50) et le bourrelet d'étanchéité (53) soient bien en contact avec la surface extérieure (51) de l'élément de bridage (141) correspondant sur au moins sensiblement tout le pourtour de celle-ci. Ce contact s'opère lors de l'introduction de l'élément de bridage (141) dans la cavité (148), au cours de laquelle on déforme quelque peu la deuxième partie (46). On remarque du reste que l'extrémité intérieure (82) des éléments de bridage (141) est également en contact avec l'extrémité (145) correspondante de la première partie (144).

Chaque élément de bridage (141) est composé de deux parties de bridage (159) identiques, en forme de demi-lune, formées chacune d'une seule pièce venant en appui sur la poutre porteuse (39) au niveau de sa face d'appui (64). Il est à remarquer que cet appui se fait en partie de manière localisée grâce aux renflements (181) prévus sur ladite partie de bridage (159).

Les deux parties de bridage (159) formant un élément de bridage (141) sont fixées l'une à l'autre au moyen d'un organe d'assemblage (160) comportant notamment un élément de fixation rapide (83). A cet effet, il est prévu que chaque partie de bridage (159) soit pourvue à l'une (165) de ses extrémités (165, 166) d'un axe d'accrochage (84) et à l'autre extrémité (166) dudit élément de fixation rapide (83). Ce dernier comporte une tige d'accrochage (85) destinée à être accrochée par l'intermédiaire d'un bec (86) prévu à son extrémité libre à l'axe d'accrochage (84) de la partie de bridage (159) adjacente, et un levier de manoeuvre (87) lié à la partie de bridage (159) au moyen d'une articulation (88) et auquel est liée la tige d'accrochage (85) au moyen d'une articulation (89). L'axe de ces deux articulations (88, 89) est au moins sensiblement parallèle à l'axe de rotation (12) du rouleau (102). On notera que l'axe d'accrochage (84) et les articulations (88, 89) ne s'étendent pas dans un même plan, ce qui permet le verrouillage par arc-boutement.

Il est également prévu que chaque extrémité (165), respectivement (166), de chaque partie de bridage (159) comporte un évidement (175), respectivement (175'), dans lesquels s'étendent les organes d'assemblage (160), en l'occurence les éléments de fixation rapide (83).

On remarque par ailleurs que lorsque les deux parties de bridage (159) sont montées et liées l'une à l'autre au moyen des éléments de fixation rapide (83), les extrémités (165, 166) desdites parties de bridage (159) ne sont pas en contact l'une sur l'autre, ce qui permet avantageusement le serrage desdites parties de bridage (159) sur la poutre porteuse (39). Du reste, chaque partie de bridage (159) comporte également un bord (78) présentant un arrondi d'un rayon relativement grand et ne s'étendent latéralement que légèrement au-delà du bandage creux (140).

Le montage d'un bandage creux (140) sur la poutre porteuse (39) s'opère comme suit :

On fixe tout d'abord un élément de bridage (141) à l'endroit souhaité sur la poutre porteuse (39) à l'aide des organes d'assemblage (160) correspondants. On enfile ensuite le bandage creux (140) sur la poutre porteuse (39) jusqu'audit élément de bridage (141) en faisant pénétrer ce dernier dans la cavité (148) correspondante du bandage creux (140). On introduit finalement le deuxième élément de bridage (141) dans l'autre cavité (148) du bandage creux (140), puis on le fixe sur la poutre porteuse (39) à l'aide des organes d'assemblage (160) correspondants.

Le rouleau (2; 102) de travail du sol selon la présente invention fonctionne de la manière suivante.

Au travail, le rouleau de travail du sol (2 ; 102) roule sur le sol (17). Sous l'effet de la charge supportée par le rouleau (2 ; 102), ses bandages creux(40 ; 140) se déforment au niveau de leur partie inférieure où ils sont en contact avec le sol (17). Compte tenu de la forme des bandages creux, la partie médiane de leur surface de roulement (56) se déforme relativement facilement en direction de l'axe de rotation (12) du rouleau (2 ; 102), alors que les parties de la surface de roulement (56) situées au niveau des flancs (55) offrent une plus grande résistance à la déformation. Ceci résulte de la petite hauteur des flancs (55) et de la présence des éléments de bridage (41 ; 141) à chaque bord latéral du bandage creux (40 ; 140).

Il en découle que la bande de terre se trouvant au niveau de la partie médiane de la surface de roulement (56) est moins fortement rappuyée que les bandes de terre adjacentes se trouvant au niveau des bords extérieurs du bandage creux (40 ; 140).

Lorsque le rouleau (2 ; 102) travaille en combinaison avec un semoir (6), il sera avantageux de régler la position des bandages creux (40 ; 140) de telle manière que les socs de semis (35A) se déplacent au niveau des bandes de terre ayant subi un rappuyage plus prononcé, c'est-à-dire celles se trouvant au niveau des bords extérieurs du bandage creux (40 ; 140).

Lorsque la partie du bandage creux (40 ; 140) qui a été déformée, n'est plus en contact avec le sol (17), elle reprend sa forme initiale et repousse la terre qui a éventuellement pu y adhérer.

Un résultat satisfaisant a pu être obtenu avec un rouleau dont le diamètre extérieur des bandages creux est sensiblement égal à 400 mm et dont le diamètre extérieur de la poutre porteuse est sensiblement égal à 300 mm.

Lorsqu'on souhaite remplacer un bandage creux (40 ; 140) détérioré situé par exemple au milieu du rouleau, il suffit d'enlever les organes d'assemblage (60 ; 160) des éléments de bridage (41 ; 141) correspondants, puis d'ôter les parties de bridage (59 ; 159) ce qui est parfaitement possible compte tenu de leur forme, et enfin d'enlever ledit bandage creux (40 ; 140) en le découpant si nécessaire. On décale ensuite successivement les divers bandages creux (40 ; 140) situés entre l'endroit libéré et une extrémité du rouleau, et on ajoute un nouveau bandage creux (40 ; 140) à ladite extrémité.

Finalement, différentes modifications restent possibles, notamment en ce qui concerne la constitution des divers éléments ou par substitution d'équivalents techniques, sans pour autant sortir du domaine de protection défini dans les revendications.

On comprendra notamment qu'il est parfaitement possible de prévoir que les parties de bridage (159) fixant les bandages creux (140) sur la poutre porteuse (39) du rouleau (102) puissent être liées entre elles au moyen de vis (69).

On comprendra également que le rouleau (2 ; 102) peut être utilisé sur une machine de préparation de lits de semence différente de celle décrite et qu'il peut même être utilisé directement sur le semoir ou tout simplement en solo.

## Revendications

1. Rouleau de travail du sol à usage agricole comprenant une poutre porteuse (39) sur laquelle sont disposés des bandages creux (40) en caoutchouc pouvant être fixés dans plusieurs positions longitudinales sur ladite poutre porteuse (39) au moyen d'éléments de bridage (41), chaque bandage creux (40) s'appuyant directement sur la poutre porteuse (39) et y étant maintenu par au moins un élément de bridage (41), caractérisé en ce que l'élément de bridage (41) est composé d'au moins deux parties de bridage (59) dissociables fixées entre elles par des organes d'assemblage (60).

2. Rouleau notamment selon la revendication 1, caractérisé en ce que chaque bandage creux (40) est maintenu par deux éléments de bridage (41) situés de part et d'autre dudit bandage creux (40).

3. Rouleau notamment selon la revendication 1 ou 2, caractérisé en ce que chaque bandage creux (40) comporte une première partie (44) s'appuyant sur la poutre porteuse (39) et dont l'extrémité longitudinale (45), en regard d'un élément de bridage (41), est pincée entre la surface extérieure (42) de ladite poutre porteuse (39) et ledit élément de bridage (41).

4. Rouleau selon la revendication 3, caractérisé en ce que la surface extérieure (42) de la poutre porteuse (39) est au moins sensiblement cylindrique et, qu'avant montage, la première partie (44) du bandage creux (40) comporte, dans la zone destinée à collaborer avec un élément de bridage (41), une surface tronconique (79, 79') convergeant vers le plan radial médian (43) dudit bandage creux (40), le diamètre du plus petit cercle (80) de ladite surface tronconique (79, 79') étant au moins sensiblement égal au diamètre de la surface extérieure (42) de ladite poutre porteuse (39).

5. Rouleau selon la revendication 4, caractérisé en ce que ledit cercle (80) est au moins sensiblement situé dans le plan radial médian (43) dudit bandage creux (40).

6. Rouleau selon une ou plusieurs des revendications 3 à 5, caractérisé en ce que l'élément de bridage (41) vient en appui sur la face supérieure (61) de la première partie (44) du bandage creux (40) de manière localisée par l'intermédiaire de renflements (81).

7. Rouleau selon une ou plusieurs des revendications 3 à 6, caractérisé en ce que la longueur de la première partie (44) est sensiblement égale aux deux tiers de la largeur extérieure totale du bandage creux (40).

8. Rouleau selon une ou plusieurs des revendications 3 à 7, caractérisé en ce que chaque bandage creux (40) comporte, du côté d'un élément de bridage (41), une deuxième partie (46) laquelle prend son origine sur la première partie (44), entre l'extrémité longitudinale (45) correspondante de cette dernière et le plan radial médian (43) et se développe de sorte à former une cavité (48) avec la première partie (44), dans laquelle pénètre ledit élément de bridage (41).

9. Rouleau de travail du sol à usage agricole comprenant une poutre porteuse (39) sur laquelle sont disposés des bandages creux (140) en caoutchouc pouvant être fixés dans plusieurs positions longitudinales sur ladite poutre porteuse (39) au moyen d'éléments de bridage (141), chaque bandage creux (140) comportant une première partie (144) en regard de la poutre porteuse (39) et, de part et d'autre de celle-ci, une deuxième partie (46) laquelle prend son origine sur ladite première partie (144) et se développe de sorte à former une cavité (148) après montage sur la poutre porteuse (39), ledit bandage creux (140) étant fixé sur cette dernière par deux éléments de bridage (141) pénétrant chacun dans une respective desdites cavités (148), caractérisé en ce que chaque élément de bridage (141) est composé d'au moins deux parties de bridage (159) dissociables fixées entre elles par des organes d'assemblage (160).

10. Rouleau notamment selon la revendication 8 ou 9, caractérisé en ce que la surface intérieure (50) de la cavité (48 ; 148) formée par la deuxième partie (46) est en contact avec la surface extérieure (51) de l'élément de bridage (41 ; 141) correspondant.

11. Rouleau notamment selon la revendication 10, caractérisé en ce que ledit contact s'opère sur au moins sensiblement tout le pourtour de la surface extérieure (51) dudit élément de bridage (41 ; 141).

12. Rouleau notamment selon une ou plusieurs des revendications 8 à 11, caractérisé en ce que la surface intérieure (50) de la cavité (48 ; 148) formée par la deuxième partie (46) épouse au moins sensiblement la surface extérieure (51) dudit élément de bridage (41 ; 141).

13. Rouleau notamment selon une ou plusieurs des revendications 8 à 12, caractérisé en ce que la surface intérieure (50) de la cavité (48 ; 148) formée par la deuxième partie (46) est courbe et concave.

14. Rouleau notamment selon une ou plusieurs des revendications 8 à 13, caractérisé en ce que l'extrémité extérieure (52) de la deuxième partie (46) s'étend latéralement au-delà de l'extrémité (45 ; 145) correspondante de la première partie (44 ; 144).

15. Rouleau notamment selon une ou plusieurs des revendications 8 à 14, caractérisé en ce que l'extrémité extérieure (52) de la deuxième partie (46) comporte un bourrelet d'étanchéité (53) s'appuyant sur tout le pourtour de l'élément de bridage (41 ; 141) correspondant.

16. Rouleau notamment selon une ou plusieurs des revendications 8 à 15, caractérisé en ce que chaque bandage creux (40 ; 140) comporte une troisième partie (54) comportant d'une part deux flancs (55) dirigés essentiellement radialement et d'autre part une surface de roulement (56) essentiellement cylindrique raccordant les deux flancs (55) entre eux et centrée au moins sensiblement sur l'axe de rotation (12) dudit bandage creux (40 ; 140), le flanc (55) situé en regard d'un élément de bridage (41 ; 141) prenant son origine à l'extrémité extérieure (52) de la deuxième partie (46) correspondante.

17. Rouleau selon la revendication 16, caractérisé en ce que la surface de roulement (56) comporte des crampons (57).

18. Rouleau selon la revendication 16 ou 17, caractérisé en ce que le flanc (55) situé en regard d'un élément de bridage (41 ; 141) est de forme arrondie, la convexité étant dirigée vers l'extérieur.

19. Rouleau selon une ou plusieurs des revendications 16 à 18, caractérisé en ce que le flanc (55) situé en regard d'un élément de bridage (41 ; 141) s'étend directement au-dessus dudit élément de bridage (41 ; 141).

20. Rouleau notamment selon une ou plusieurs des revendications 1 à 19, caractérisé en ce que l'élément de bridage (41 ; 141) vient en appui sur la poutre porteuse (39).

21. Rouleau selon la revendication 20, caractérisé en ce que l'appui dudit élément de bridage (41 ; 141) sur la poutre porteuse (39) est un appui au moins sensiblement linéaire.

22. Rouleau selon la revendication 20, caractérisé en ce que l'appui dudit élément de bridage (41 ; 141) sur la poutre porteuse (39) est un appui surfacique.

23. Rouleau notamment selon une ou plusieurs des revendications 1 à 22, caractérisé en ce que, après montage, les extrémités adjacentes (65, 66 ; 165, 166) des parties de bridage (59 ; 159) d'un élément de bridage (41 ; 141) ne sont pas en contact l'une sur l'autre.

24. Rouleau notamment selon une ou plusieurs des revendications 1 à 23, caractérisé en ce que les organes d'assemblage (60) comportent au moins une vis (69).

25. Rouleau selon la revendication 24, caractérisé en ce que l'axe (70) de la vis (69) forme un angle (71) avec le plan radial médian (43) du bandage creux (40) de telle sorte que la tête (72) de la vis (69) soit plus éloignée dudit plan radial médian (43) que l'extrémité (73) de sa tige (74).

26. Rouleau selon la revendication 24 ou 25, caractérisé en ce que l'une (65) des extrémités (65, 66) de chaque partie de bridage (59) est pourvue d'un trou lisse (67) et l'autre extrémité (66) de ladite partie de bridage (59) est pourvue d'un trou taraudé (68), une vis (69) étant destinée à traverser le trou lisse (67) de l'une des parties de bridage (59) et à être vissée dans le trou taraudé (68) de la partie de bridage (59) adjacente.

27. Rouleau selon la revendication 26, caractérisé en ce que l'extrémité (65) de chaque partie de bridage (59) qui est pourvue d'un trou lisse (67), comporte un évidement (75) pour le logement de la tête (72) de la vis (69) correspondante.

28. Rouleau notamment selon une ou plusieurs des revendications 1 à 23, caractérisé en ce que les organes d'assemblage (160) comportent au moins un élément de fixation rapide (83).

29. Rouleau selon la revendication 28, caractérisé en ce que l'une (165) des extrémités (165, 166) de chaque partie de bridage (159) est pourvue d'un axe d'accrochage (84) et l'autre extrémité (166) de ladite partie de bridage (159) est pourvue de l'élément de fixation rapide (83), ledit élément de fixation rapide (83) de l'une des parties de bridage (159) étant destiné à s'accrocher à l'axe d'accrochage (84) de la partie de bridage (159) adjacente.

30. Rouleau selon la revendication 29, caractérisé en ce que chaque partie de bridage (159) comporte, à l'une (165) de ses extrémités (165, 166), un évidement (175) pour le logement de l'axe d'accrochage (84) et, à l'autre extrémité (166), un évidement (175') pour le logement de l'élément de fixation rapide (83).

31. Rouleau notamment selon une ou plusieurs des revendications 1 à 30, caractérisé en ce que les organes d'assemblage (60 ; 160) ne s'étendent pas au-delà de la périphérie des éléments de bridage (41 ; 141).

32. Rouleau notamment selon une ou plusieurs des revendications 1 à 31, caractérisé en ce que chaque partie de bridage (59 ; 159) est formée par une seule pièce présentant une certaine élasticité.

33. Rouleau notamment selon une ou plusieurs des revendications 1 à 32, caractérisé en ce que toutes les parties de bridage (59 ; 159) d'un élément de bridage (41 ; 141) sont identiques.

34. Rouleau notamment selon une ou plusieurs des revendications 1 à 33, caractérisé en ce que chaque partie de bridage (59 ; 159) est obtenue par moulage.

35. Rouleau notamment selon une ou plusieurs des revendications 1 à 34, caractérisé en ce que le bord (78) de chaque partie de bridage (59 ; 159) ne s'étend latéralement que légèrement au-delà du bandage creux (40 ; 140).

36. Rouleau selon la revendication 35, caractérisé en ce que ledit bord (78) présente un arrondi d'un rayon relativement grand.

37. Rouleau notamment selon une ou plusieurs des revendications 1 à 36, caractérisé en ce que chaque bandage creux (40 ; 140) est au moins sensiblement symétrique par rapport à son plan radial médian (43).

38. Rouleau notamment selon une ou plusieurs des revendications 1 à 37, caractérisé en ce que le diamètre extérieur du bandage creux (40 ; 140) est au moins égal à 400 mm.

39. Rouleau notamment selon une ou plusieurs des revendications 1 à 38, caractérisé en ce que le diamètre extérieur de la poutre porteuse (39) est au moins égal à 300 mm tout en restant inférieur au diamètre extérieur du bandage creux (40 ; 140).

40. Machine agricole combinée de travail du sol (1) comportant une machine agricole de travail du sol (5) et/ou un semoir (6) et un rouleau (2 ; 102), caractérisée en ce que ledit rouleau (2 ; 102) est un rouleau selon une ou plusieurs des revendications 1 à 39.

## Patentansprüche

1. Bodenbearbeitungswalze zur landwirtschaftlichen Verwendung mit einem Stützträger (39), an dem Elastikreifen (40) aus Gummi angeordnet sind, die mittels Klemmelementen (41) in mehreren Längspositionen an dem Stützträger (39) befestigt werden können, wobei jeder Elastikreifen (40) sich direkt an dem Stützträger (39) stützt und dort mittels mindestens eines Klemmelements (41) gehalten wird, ***dadurch gekennzeichnet,*** daß das Klemmelement (41) aus mindestens zwei trennbaren Klemmteilen (59) besteht, die durch Montageglieder (60) aneinander befestigt sind.

2. Walze, insbesondere nach Anspruch 1, ***dadurch gekennzeichnet,*** daß jeder Elastikreifen (40) von zwei auf beiden Seiten des Elastikreifens (40) angeordneten Klemmelementen (41) gehalten wird.

3. Walze, insbesondere nach Anspruch 1 oder 2, ***dadurch gekennzeichnet,*** daß jeder Elastikreifen (40) einen ersten Teil (44) aufweist, der sich an dem Stützträger (39) stützt und dessen Längsende (45) gegenüber einem Klemmelement (41) zwischen der Außenfläche (42) des Stützträgers (39) und dem Klemmelement (41) eingeklemmt ist.

4. Walze nach Anspruch 3, ***dadurch gekennzeichnet,*** daß die Außenfläche (42) des Stützträgers (39) zumindest im wesentlichen zylindrisch ist und daß der erste Teil (44) des Elastikreifens (40) vor der Montage in dem zum Zusammenwirken mit einem Klemmelement (41) bestimmten Bereich eine kegelstumpfförmige Fläche (79, 79') aufweist, die zur radialen Mittelebene (43) des Elastikreifens (40) konvergiert, wobei der Durchmesser des kleinsten Kreises (80) der kegelstumpfförmigen Fläche (79, 79') zumindest im wesentlichen gleich dem Durchmesser der Außenfläche (42) des Stützträgers (39) ist.

5. Walze nach Anspruch 4, ***dadurch gekennzeichnet,*** daß sich der Kreis (80) zumindest im wesentlichen in der radialen Mittelebene (43) des Elastikreifens (40) befindet.

6. Walze nach einem oder mehreren der Ansprüche 3 bis 5, ***dadurch gekennzeichnet,*** daß das Klemmelement (41) mittels Verstärkungen (81) örtlich begrenzt an der Oberseite (61) des ersten Teils (44) des Elastikreifens (40) zur Anlage kommt.

7. Walze nach einem oder mehreren der Ansprüche 3 bis 6, ***dadurch gekennzeichnet,*** daß die Länge des ersten Teils (44) im wesentlichen zwei Drittel der Gesamtaußenbreite des Elastikreifens (40) beträgt.

8. Walze nach einem oder mehreren der Ansprüche 3 bis 7, ***dadurch gekennzeichnet,*** daß jeder Elastikreifen (40) auf der Seite eines Klemmelements (41) einen zweiten Teil (46) aufweist, der zwischen dem entsprechenden Längsende (45) des ersten Teils (44) und der radialen Mittelebene (43) von dem ersten Teil ausgeht und weiter so gestaltet ist, daß er mit dem ersten Teil (44) einen Hohlraum (48) bildet, in den das Klemmelement (41) eindringt.

9. Bodenbearbeitungswalze zur landwirtschaftlichen Verwendung mit einem Stützträger (39), an dem Elastikreifen (140) aus Gummi angeordnet sind, die mittels Klemmelementen (141) in mehreren Längspositionen an dem Stützträger (39) befestigt werden können, wobei jeder Elastikreifen (140) gegenüber dem Stützträger (39) einen ersten Teil (144) und auf beiden Seiten des Stützträgers (39) einen zweiten Teil (46) aufweist, der von dem ersten Teil (144) ausgeht und weiter so gestaltet ist, daß er nach der Montage an dem Stützträger (39) einen Hohlraum (148) bildet, wobei der Elastikreifen (140) durch zwei Klemmelemente (141), die jeweils in einen jeweiligen der Hohlräume (148) eindringen, an dem Stützträger befestigt ist, ***dadurch*** ***gekennzeichnet,*** daß jedes Klemmelement (141) aus mindestens zwei trennbaren Klemmteilen (159) besteht, die durch Montageglieder (160) aneinander befestigt sind.

10. Walze, insbesondere nach Anspruch 8 oder 9, ***dadurch gekennzeichnet,*** daß die Innenfläche (50) des durch den zweiten Teil (46) gebildeten Hohlraums (48; 148) die Außenfläche (51) des entsprechenden Klemmelements (41; 141) berührt.

11. Walze, insbesondere nach Anspruch 10, ***dadurch gekennzeichnet,*** daß die Berührung über zumindest im wesentlichen den gesamten Umfang der Außenfläche (51) des Klemmelements (41; 141) erfolgt.

12. Walze, insbesondere nach einem oder mehreren der Ansprüche 8 bis 11, ***dadurch gekennzeichnet,*** daß die Innenfläche (50) des von dem zweiten Teil (46) gebildeten Hohlraums (48; 148) zumindest im wesentlichen der Außenfläche (51) des Klemmelements (41; 141) angepaßt ist.

13. Walze nach einem oder mehreren der Ansprüche 8 bis 12, ***dadurch gekennzeichnet,*** daß die Innenfläche (50) des von dem zweiten Teil (46) gebildeten Hohlraums (48; 148) gekrümmt und konkav ist.

14. Walze, insbesondere nach einem oder mehreren der Ansprüche 8 bis 13, ***dadurch gekennzeichnet,*** daß sich das äußere Ende (52) des zweiten Teils (46) seitlich über das entsprechende Ende (45; 145) des ersten Teils (44; 144) hinaus erstreckt.

15. Walze, insbesondere nach einem oder mehreren der Ansprüche 8 bis 14, ***dadurch gekennzeichnet,*** daß das äußere Ende (52) des zweiten Teils (46) einen Dichtungswulst (53) aufweist, der sich auf den gesamten Umfang des entsprechenden Klemmelements (41; 141) stützt.

16. Walze, insbesondere nach einem oder mehreren der Ansprüche 8 bis 15, ***dadurch gekennzeichnet****,* daß jeder Elastikreifen (40; 140) einen dritten Teil (54) aufweist, der einerseits zwei im wesentlichen radial ausgerichtete Flanken (55) und andererseits eine im wesentlichen zylindrische Lauffläche (56) aufweist, die die beiden Flanken (55) miteinander verbindet und zumindest im wesentlichen auf der Drehachse (12) des Elastikreifens (40; 140) zentriert ist, wobei die sich gegenüber einem Klemmelement (41; 141) befindende Flanke (55) von dem äußeren Ende (52) des entsprechenden zweiten Teils (46) ausgeht.

17. Walze nach Anspruch 16, ***dadurch gekennzeichnet,*** daß die Lauffläche (56) Spike (57) aufweist.

18. Walze nach Anspruch 16 oder 17, ***dadurch gekennzeichnet,*** daß die sich gegenüber einem Klemmelement (41; 141) befindende Flanke (55) abgerundet ist, wobei die Konvexität nach außen gerichtet ist.

19. Walze nach einem oder mehreren der Ansprüche 16 bis 18, *dadurch* ***gekennzeichnet****,* daß sich die sich gegenüber einem Klemmelement (41; 141) befindende Flanke (55) direkt über dem Klemmelement (41; 141) erstreckt.

20. Walze, insbesondere nach einem oder mehreren der Ansprüche 1 bis 19, ***dadurch gekennzeichnet****,* daß das Klemmelement (41; 141) an dem Stützträger (39) anliegt.

21. Walze nach Anspruch 20, ***dadurch gekennzeichnet,*** daß das Klemmelement (41; 141) an dem Stützträger (39) im wesentlichen linear anliegt.

22. Walze nach Anspruch 20, ***dadurch gekennzeichnet,*** daß das Klemmelement (41; 141) an dem Stützträger (39) über die Oberfläche anliegt.

23. Walze, insbesondere nach einem oder mehreren der Ansprüche 1 bis 22, ***dadurch gekennzeichnet****,* daß sich die benachbarten Enden (65, 66; 165, 166) der Klemmteile (59; 159) eines Klemmelements (41; 141) nach der Montage nicht berühren.

24. Walze, insbesondere nach einem oder mehreren der Ansprüche 1 bis 23, ***dadurch gekennzeichnet****,* daß die Montageglieder (60) mindestens eine Schraube (69) umfassen.

25. Walze nach Anspruch 24, ***dadurch gekennzeichnet,*** daß die Achse (70) der Schraube (69) mit der radialen Mittelebene (43) des Elastikreifens (40) einen solchen Winkel (71) bildet, daß der Kopf (72) der Schraube (69) weiter von der radialen Mittelebene (43) entfernt ist als das Ende (73) seines Schafts (74).

26. Walze nach Anspruch 24 oder 25, ***dadurch gekennzeichnet,*** daß eines (65) der Enden (65, 66) jedes Klemmteils (59) mit einer glatten Bohrung (67) und das andere Ende (66) des Klemmteils (59) mit einer Gewindebohrung (68) versehen ist, wobei eine Schraube (69) die glatte Bohrung (67) eines der Klemmteile (59) durchqueren und in die Gewindebohrung (68) des benachbarten Klemmteils (59) geschraubt werden soll.

27. Walze nach Anspruch 26, ***dadurch gekennzeichnet,*** daß das Ende (65) jedes Klemmteils (59), das mit einer glatten Bohrung (67) versehen ist, eine Aussparung (75) zur Aufnahme des Kopfes (72) der entsprechenden Schraube (69) aufweist.

28. Walze, insbesondere nach einem oder mehreren der Ansprüche 1 bis 23, ***dadurch gekennzeichnet,*** daß die Montageglieder (160) mindestens ein Schnellbefestigungselement (83) aufweisen.

29. Walze nach Anspruch 28, ***dadurch gekennzeichnet,*** daß eines (165) der Enden (165, 166) jedes Klemmteils (159) mit einer Greifachse (84) und das andere Ende (166) des Klemmteils (159) mit einem Schnellbefestigungselement (83) versehen ist, wobei das Schnellbefestigungselement (83) des einen Klemmteils (159) an der Greifachse (84) des benachbarten Klemmteils (159) in Eingriff gebracht werden soll.

30. Walze nach Anspruch 29, ***dadurch gekennzeichnet,*** daß jeder Klemmteil (159) an einem (165) seiner Enden (165, 166) eine Aussparung (175) zur Aufnahme der Greifachse (84) und am anderen Ende (166) eine Aussparung (175') zur Aufnahme des Schnellbefestigungselements (83) aufweist.

31. Walze, insbesondere nach einem oder mehreren der Ansprüche 1 bis 30, ***dadurch gekennzeichnet****,* daß sich die Montageglieder (60; 160) nicht über den Umfang der Klemmelemente (41; 141) hinaus erstrecken.

32. Walze, insbesondere nach einem oder mehreren der Ansprüche 1 bis 31, ***dadurch gekennzeichnet****,* daß jeder Klemmteil (59; 159) aus einem einzigen Stück mit einer bestimmten Elastizität gebildet wird.

33. Walze, insbesondere nach einem oder mehreren der Ansprüche 1 bis 32, ***dadurch gekennzeichnet,*** daß alle Klemmteile (59; 159) eines Klemmelements (41; 141) identisch sind.

34. Walze, insbesondere nach einem oder mehreren der Ansprüche 1 bis 33, ***dadurch gekennzeichnet****,* daß jeder Klemmteil (59; 159) durch Formen erhalten wird.

35. Walze, insbesondere nach einem oder mehreren der Ansprüche 1 bis 34, ***dadurch gekennzeichnet,*** daß sich der Rand (78) jedes Klemmteils (59; 159) nur leicht seitlich über den Elastikreifen (40; 140) hinaus erstreckt.

36. Walze nach Anspruch 35, ***dadurch gekennzeichnet,*** daß der Rand (78) eine Abrundung mit einem relativ großen Radius aufweist.

37. Walze, insbesondere nach einem oder mehreren der Ansprüche 1 bis 36, ***dadurch gekennzeichnet****,* daß jeder Elastikreifen (40; 140) zumindest im wesentlichen symmetrisch zur radialen Mittelebene (43) ist.

38. Walze, insbesondere nach einem oder mehreren der Ansprüche 1 bis 37, ***dadurch gekennzeichnet****,* daß der Außendurchmesser des Elastikreifens (40; 140) mindestens 400 mm beträgt.

39. Walze, insbesondere nach einem oder mehreren der Ansprüche 1 bis 38, ***dadurch gekennzeichnet,*** daß der Außendurchmesser des Stützträgers (39) mindestens 300 mm beträgt und dabei kleiner bleibt als der Außendurchmesser des Elastikreifens (40; 140).

40. Kombinierte Landmaschine (1) zur Bodenbearbeitung, die eine Landmaschine (5) zur Bodenbearbeitung und/oder eine Sämaschine (6) und eine Walze (2; 102) umfaßt, ***dadurch gekennzeichnet,*** daß es sich bei der Walze (2; 102) um eine Walze gemäß einem oder mehreren der Ansprüche 1 bis 39 handelt.

## Claims

1. Soil-working roller for agricultural use, comprising a carrying beam (39) on which are arranged hollow rubber tyres (40) which can be fixed in different longitudinal positions along the said carrying beam (39) by means of clamping elements (41), each hollow tyre (40) resting directly against the carrying beam (39) and being held thereon by at least one clamping element (41), ***characterized in*** that the clamping element (41) is made up of at least two separable clamping parts (59) fixed together by assembly members (60).

2. Roller particularly according to Claim 1, ***characterized in*** that each hollow tyre (40) is held in place by two clamping elements (41) which are located one on each side of the said hollow tyre (40).

3. Roller particularly according to Claim 1 or 2, ***characterized in*** that each hollow tyre (40) comprises a first part (44) resting against the carrying beam (39) and of which the longitudinal end (45) facing a clamping element (41) is gripped between the exterior surface (42) of the said carrying beam (39) and the said clamping element (41).

4. Roller according to Claim 3, ***characterized in*** that the exterior surface (42) of the carrying beam (39) is at least substantially cylindrical and that, prior to mounting, the first part (44) of the hollow tyre (40) comprises, in the region intended to collaborate with a clamping element (41), a frustoconical surface (79, 79') converging towards the radial mid-plane (43) of the said hollow tyre (40), the diameter of the smallest circle (80) of the said frustoconical surface (79, 79') being at least substantially equal to the diameter of the exterior surface (42) of the said carrying beam (39).

5. Roller according to Claim 4, ***characterized in*** that the said circle (80) is at least substantially located in the radial mid-plane (43) of the said hollow tyre (40).

6. Roller according to one or more of Claims 3 to *5, **characterized in*** that the clamping element (41) comes to bear against the upper face (61) of the first part (44) of the hollow tyre (40) in a localized way through the action of bulges (81).

7. Roller according to one or more of Claims 3 to 6, ***characterized in*** that the length of the first part (44) is substantially equal to two thirds of the total exterior width of the hollow tyre (40).

8. Roller according to one or more of Claims 3 to 7, ***characterized in*** that each hollow tyre (40) comprises, on the same side as one clamping element (41), a second part (46) which originates on the first part (44), between the corresponding longitudinal end (45) thereof and the radial mid-plane (43) and develops in such a way as to form a cavity (48) with the first part (44), into which cavity the said clamping element (41) penetrates.

9. Soil-working roller for agricultural use, comprising a carrying beam (39) on which are arranged hollow rubber tyres (140) which can be fixed in different longitudinal positions along the said carrying beam (39) by means of clamping elements (141), each hollow tyre (140) comprising a first part (144) facing the carrying beam (39) and, on each side thereof, a second part (46) which originates on the said first part (144) and develops in such a way as to form a cavity (148) after mounting on the carrying beam (39), the said hollow tyre (140) being fixed to this beam by two clamping elements (141) each penetrating into a respective one of the said cavities (148), ***characterized in*** that each clamping element (141) is made up of at least two separable clamping parts (159) fixed together by assembly members (160).

10. Roller particularly according to Claim 8 or 9, ***characterized in*** that the interior surface (50) of the cavity (48; 148) formed by the second part (46) is in contact with the exterior surface (51) of the corresponding clamping element (41; 141).

11. Roller particularly according to Claim 10, ***characterized in*** that the said contact occurs over at least substantially the entire periphery of the exterior surface (51) of the said clamping element (41; 141).

12. Roller particularly according to one or more of Claims 8 to 11, ***characterized in*** that the interior surface (50) of the cavity (48; 148) formed by the second part (46) at least substantially follows the exterior surface (51) of the said clamping element (41; 141).

13. Roller particularly according to one or more of Claims 8 to 12, ***characterized in*** that the interior surface (50) of the cavity (48; 148) formed by the second part (46) is curved and concave.

14. Roller particularly according to one or more of Claims 8 to 13, ***characterized in*** that the outer end (52) of the second part (46) extends laterally beyond the corresponding end (45; 145) of the first part (44; 144).

15. Roller particularly according to one or more of Claims 8 to 14, ***characterized*** ***in*** that the outer end (52) of the second part (46) has a sealing bead (53) pressing against the entire periphery of the corresponding clamping element (41; 141).

16. Roller particularly according to one or more of Claims 8 to 15, ***characterized*** ***in*** that each hollow tyre (40; 140) comprises a third part (54) comprising, on the one hand, two flanks (55) directed substantially radially and, on the other hand, a substantially cylindrical tread (56) connecting the two flanks (55) together, and at least approximately centred on the axis of rotation (12) of the said hollow tyre (40; 140), the flank (55) located facing one clamping element (41; 141) originating at the outer end (52) of the corresponding second part (46).

17. Roller according to Claim 16, ***characterized in*** that the tread (56) comprises grousers (57).

18. Roller according to Claim 16 or 17, ***characterized in*** that the flank (55) located facing one clamping element (41; 141) is of rounded shape, the convex side facing outwards.

19. Roller according to one or more of Claims 16 to 18, ***characterized in*** that the flank (55) located facing one clamping element (41; 141) extends directly above the said clamping element (41; 141).

20. Roller particularly according to one or more of Claims 1 to 19, ***characterized*** ***in*** that the clamping element (41; 141) comes to bear against the carrying beam (39).

21. Roller according to Claim 20, ***characterized in*** that the way in which the said clamping element (41; 141) bears against the carrying beam (39) is at least substantially linear.

22. Roller according to Claim 20, ***characterized in*** that the way in which the said clamping element (41; 141) bears against the carrying beam (39) is across an area.

23. Roller particularly according to one or more of Claims 1 to 22, ***characterized*** ***in*** that, after mounting, the adjacent ends (65, 66; 165, 166) of the clamping parts (59; 159) of a clamping element (41; 141) are not in contact with each other.

24. Roller particularly according to one or more of Claims 1 to 23, ***characterized*** ***in*** that the assembly members (60) comprise at least one screw (69).

25. Roller according to Claim 24, ***characterized in*** that the axis (70) of the screw (69) forms an angle (71) with the radial mid-plane (43) of the hollow tyre (40) such that the head (72) of the screw (69) is further away from the said radial mid-plane (43) than is the end (73) of its shank (74).

26. Roller according to Claim 24 or 25, ***characterized in*** that one (65) of the ends (65, 66) of each clamping part (59) is provided with a plain hole (67) and the other end (66) of the said clamping part (59) is provided with a tapped hole (68), a screw (69) being intended to pass through the plain hole (67) in one of the clamping parts (59) and to be screwed into the tapped hole (68) in the adjacent clamping part (59).

27. Roller according to Claim 26, ***characterized in*** that the end (65) of each clamping part (59) which is provided with a plain hole (67) comprises a recess (75) to house the head (72) of the corresponding screw (69).

28. Roller particularly according to one or more of Claims 1 to 23, ***characterized in*** that the assembly members (160) comprise at least one quick-fix element (83).

29. Roller according to Claim 28, ***characterized in*** that one (165) of the ends (165, 166) of each clamping part (159) is provided with a catching shaft (84) and the other end (166) of the said clamping part (159) is provided with the quick-fix element (83), the said quick-fix element (83) of one of the clamping parts (159) being intended to catch on the catching shaft (84) belonging to the adjacent clamping part (159).

30. Roller according to Claim 29, ***characterized in*** that each clamping part (159) comprises, at one (165) of its ends (165, 166), a recess (175) for housing the catching shaft (84) and, at the other end (166), a recess (175') for housing the quick-fix element (83).

31. Roller particularly according to one or more of Claims 1 to 30, ***characterized*** ***in*** that the assembly members (60; 160) do not extend beyond the periphery of the clamping elements (41; 141).

32. Roller particularly according to one or more of Claims 1 to 31, ***characterized in*** that each clamping part (59; 159) is formed of a single piece which has a certain elasticity.

33. Roller particularly according to one or more of Claims 1 to 32, ***characterized*** ***in*** that all the clamping parts (59; 159) of one clamping element (41; 141) are identical.

34. Roller particularly according to one or more of Claims 1 to 33, ***characterized*** ***in*** that each clamping part (59; 159) is obtained by moulding.

35. Roller particularly according to one or more of Claims 1 to 34, ***characterized*** ***in*** that the edge (78) of each clamping part (59; 159) extends laterally only slightly beyond the hollow tyre (40; 140).

36. Roller according to Claim 35, ***characterized in*** that the said edge (78) is rounded with a relatively large radius of curvature.

37. Roller particularly according to one or more of Claims 1 to 36, ***characterized*** ***in*** that each hollow tyre (40; 140) is at least substantially symmetric with respect to its radial mid-plane (43).

38. Roller particularly according to one or more of Claims 1 to 37, ***characterized*** ***in*** that the outside diameter of the hollow tyre (40; 140) is at least equal to 400 mm.

39. Roller particularly according to one or more of Claims 1 to 38, ***characterized*** ***in*** that the outside diameter of the carrying beam (39) is at least equal to 300 mm while remaining smaller than the outside diameter of the hollow tyre (40; 140).

40. Combined agricultural soil-working machine (1) comprising an agricultural soil-working machine (5) and/or a seed drill (6) and a roller (2; 102), ***characterized in*** that the said roller (2; 102) is a roller according to one or more of Claims 1 to 39.
